# EUROPEAN PATENT APPLICATION

(11) **EP 1 954 020 A2**
(43) Date of publication of application: **06.08.2008**
(21) Application number: 08100939.1
(22) Date of filing: 25.01.2008
(51) Int. Cl.: H04M 15/00, G06F 13/00, G06F 15/00

(54) **Method and apparatus for distributing call detail record**

(30) Priority: 30.01.2007 CN 200710002775; 10.10.2007 WO PCT/CN2007/070869
(71) Applicant: Huawei Technologies Co., Ltd., Longgang District, Shenzhen Guangdong 518129 (CN)
(72) Inventor: Luo, Junqiang, 518129, Guangdong (CN); Lu, Jiguang, 518129, Guangdong (CN)
(74) Representative: Körber, Martin Hans

(57) **Abstract**

The present invention provides a method for distributing a call detail record including: selecting a call detail record according with a distribution condition from call detail records to be selected; determining distribution destination information corresponding to the distribution condition; and distributing the call detail record according with the distribution condition according to the determined distribution destination information. The present invention also provides an apparatus for distributing a call detail record. By applying the present invention, bases for distribution may be revised and updated; therefore, a call detail record can be distributed to an appointed destination automatically, and changefulness in distributing the call detail record is adapted to and automatic distribution of the call detail record is implemented.

## Description

### Field of the Technology

The present invention relates to charging technologies, and more particularly, to a method and an apparatus for distributing a call detail record.

### Background of the Invention

A telecommunication operator charges for telecommunication services used by a user generally according to service using records of the user, and the service using record is referred to as a call detail record. In a charging system, multiple hosts perform distributed processing for a call detail record. For example, a charging host performs preprocessing and first rating for the call detail record, an accounting host performs second rating, call detail record generation, and call detail record discount for the call detail record, and a query host performs stock-in for the call detail record. When a call detail record in a process enters a host in the charging system, the call detail record may be distributed in different storage directories in the host, and the call detail record may also be distributed to other hosts in the charging system via the host. The ways of storing a call detail record in a host include storing the call detail record in a database and storing the call detail record as a file, and when the call detail record is stored as a file, each file corresponds to a file storage directory.

At present, each host stores a program with a distribution function. The program is written with codes aiming at different call detail record distribution rules. In each segment of the codes, items of a call detail record in a process are analyzed to determine the distribution destination of the call detail record and the way of storing the call detail record. The program with the distribution function can run only after the codes are compiled and made online. When a call detail record is distributed, the program with the distribution function stored in a host runs first, and a call detail record queue in a process is transferred by using the File Transfer Protocol (FTP) according to the running result of the program, and then the call detail record queue is distributed to appointed destinations; here, the FTP is used by writing a script or used manually. When the destination host for the call detail record is changed, or the way of storing the call detail record is switched, or the storage directory for the call detail record in the same destination host is changed, the codes must be rewritten for the call detail record; and the new codes are compiled and made online so as to make the program with distribution function which is written with the new codes run. Thus, according to the running result of the program, the call detail record is distributed to the changed host, or stored in the new way, or stored in the different storage directory in the same destination host. Thus, when the operator provides a new service or newly adds a new distribution way, the code must be rewritten, compiled and made online again. The process of compiling codes and making the codes online is complex and with venture for the operator and the maintenance personnel. Therefore, the conventional way of implementing call detail record distribution, in which the codes are rewritten, and the program with distribution function runs by compiling rewritten codes and making the rewritten code online, can not adapt to changefulness in distributing the call detail record and can not distribute the call detail record automatically.

### Summary of the Invention

Embodiments of the present invention provide a method for distributing a call detail record which may adapt to changefulness in distributing the call detail record and distribute the call detail record automatically.

Embodiments of the present invention provide an apparatus for distributing a call detail record which may adapt to changefulness in distributing the call detail record and distribute the call detail record automatically.

A method for distributing a call detail record includes:
selecting a call detail record according with a distribution condition from call detail records to be selected;
determining distribution destination information corresponding to the distribution condition; and
distributing the call detail record according with the distribution condition according to the determined distribution destination information.

An apparatus for distributing a call detail record includes:
a front-end configuration module, for configuring distribution conditions;
a distribution processing module, for selecting a call detail record according with a distribution condition from call detail records to be selected; determining distribution destination information corresponding to the distribution condition; and distributing the call detail record according with the distribution condition according to the determined distribution destination information.

It can be seen from the above technical scheme, in the method for distributing a call detail record provided by the embodiments of the present invention, a distribution parameter may be dynamically configured via a front-end as required and thus the process of configuring the distribution parameter is transparent to the process of distributing the call detail record. Therefore, the method may adapt to changefulness in distributing the call detail record. Moreover, before being distributed every time, a call detail record is selected according to a distribution condition, and then the call detail record, after being selected, is distributed according to the relation between the distribution condition and the distribution destination information. Thus, the call detail record is distributed automatically.

In the apparatus for distributing a call detail record provided by the embodiments of the present invention, a distribution parameter may be dynamically configured via a front-end configuration module as required, thus the process of configuring the distribution parameter is transparent to the process of distributing the call detail record. Therefore, the apparatus may adapt to changefulness in distributing the call detail record. Moreover, before the distribution module distributes a call detail record every time, the call detail record is selected according to a distribution condition, and then the call detail record, after being selected, is distributed according to the relation between the distribution condition and the distribution destination information. Thus, the call detail record is distributed automatically.

### Brief Description of the Drawings

Figure 1 shows a schematic diagram illustrating a structure of an apparatus for distributing a call detail record automatically in accordance with an embodiment of the present invention.
Figure 2 shows a schematic diagram illustrating a structure of a distribution parameter in an apparatus for distributing a call detail record automatically in accordance with an embodiment of the present invention.
Figure 3 shows a schematic diagram illustrating a structure of a system for distributing a call detail record automatically in accordance with an embodiment of the present invention.
Figure 4 shows a flow chart of a method for distributing a call detail record automatically in accordance with an embodiment of the present invention.
Figure 5 shows a flow chart of a method for distributing a call detail record automatically according to the system shown in Figure 3 in accordance with an embodiment of the present invention.

### Detailed Description of the Invention

Preferred embodiments of the present invention are now made to the following description taken in conjunction with the accompanying drawings so as to provide a more explicit explanation of the object and technical solution of the present invention.

Embodiments of the present invention provide a method for distributing a call detail record automatically. In the method, a call detail record according with a distribution condition is selected and then distributed according to the relation between the distribution condition and the distribution destination information.

Embodiments of the present invention provide an apparatus for distributing a call detail record automatically. The apparatus includes a distribution processing module and a front-end configuration module. The distribution processing module may further include a distribution module, a data storage parameter module, a rule engine and a transmission channel parameter module.

Embodiments of the present invention provide a system for distributing a call detail record automatically. The system includes at least one host. The host includes a host transmission module and a distribution processing module. The distribution processing module includes a transmission channel parameter module.

The method, apparatus and system provided by the embodiments of the present invention are described as follows in detail.

The apparatus for distributing a call detail record automatically provided by an embodiment of the present invention is first described in detail.

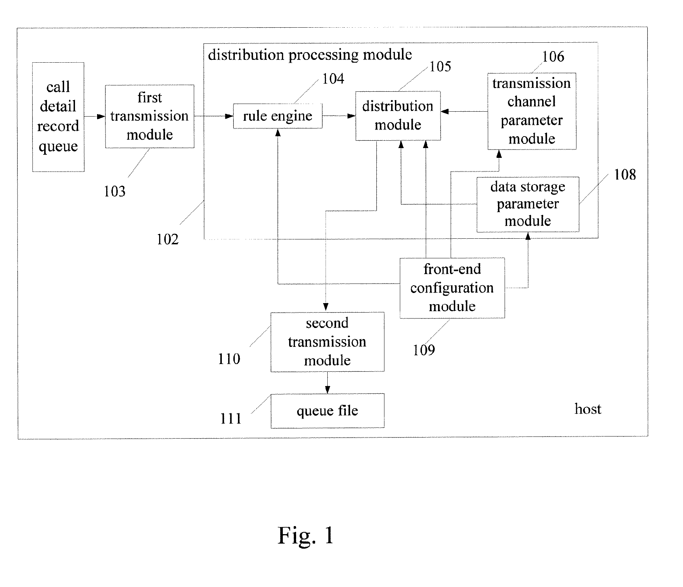

Figure 1 shows a schematic diagram illustrating a structure of an apparatus for distributing a call detail record automatically in accordance with an embodiment of the present invention. With reference to Figure 1, the apparatus is a host and includes a distribution processing module 102 and a front-end configuration module 109. The distribution processing module may further include a rule engine 104, a distribution module 105, a transmission channel parameter module 106 and a data storage parameter module 108. The host may further include a first transmission module 103 and a second transmission module 110. The file storage directory for call detail record distribution is in a queue file 111.

The front-end configuration module 109 configures distribution conditions, such as distribution condition strings or distribution condition sets, for the rule engine 104, configures distribution parameters for the distribution module 105, configures data storage parameters for the data storage parameter module 108, and configures transmission channel parameters for the transmission channel parameter module 106.

The data storage parameter includes a data storage name, a file name rule, a host identifier and a file storage directory. The host identifier is an identifier configured for each host in advance, corresponds to the Internet Protocol (IP) address of the host, and may be used for an indication identifying different hosts. The data storage name is used to distinguish different data storage parameters, that is, each data storage name corresponds to a host identifier, a file storage directory, and a file name rule, i.e. the file storage directory is configured in the host corresponds to the host identifier, and the file according with the file name rule is stored in the file storage directory.

The transmission channel parameter includes host identifiers of the host including the transmission channel parameter module and other hosts, the IP addresses corresponding to the host identifiers and the data storage parameters corresponding to the host identifiers. Here, the data storage parameters corresponding to the host identifier includes the file name rule corresponding to the host identifier and the file storage directory corresponding to the file name rule, i.e. the files according with the file name rule are stored in the file storage directory.

The data storage parameters corresponding to the host identifier are also in the data storage parameters. There may be more than one file name rule corresponding to the host identifier.

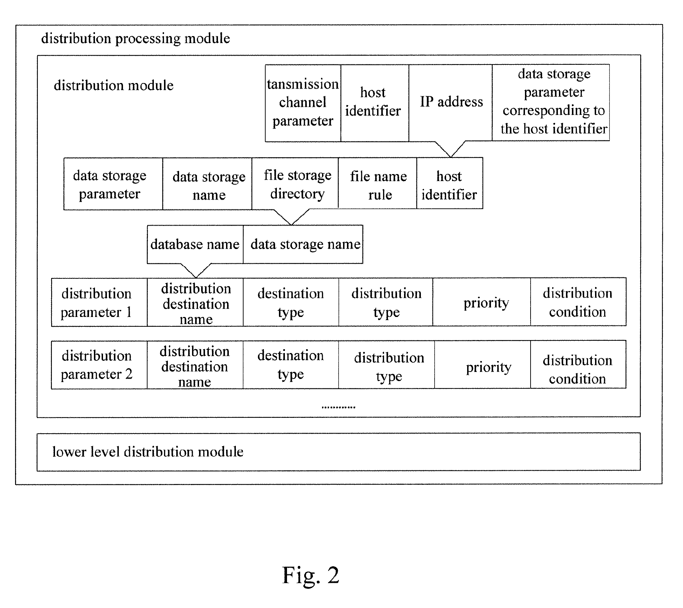

The distribution parameter includes a distribution destination name, a destination type, a distribution type, priority and a distribution condition. Figure 2 shows a schematic diagram illustrating a structure of a distribution parameter in the apparatus for distributing a call detail record automatically in accordance with an embodiment of the present invention. As shown in Figure 2, multiple distribution parameters are configured in the distribution module 105, and the number of the distribution parameters may be configured as required. An embedded distribution module may also be configured as required in the distribution module 105 as a lower level distribution module of the distribution module 105. Each distribution parameter in the distribution module 105 includes a distribution destination name, a destination type, a distribution type, priority and a distribution condition. The distribution destination name includes a database table name or a data storage name; here each database table name corresponds to a database capable of storing a call detail record. The destination type includes a database table, data storage or a lower level distribution module. When the destination type is the database table, it is indicated that the call detail record is to be stored into the database; when the destination type is the data storage, it is indicated that the call detail record is to be distributed as a file and stored in a file storage directory; and when the destination type is the lower level distribution module, it is indicated that distribution parameters in the embedded lower level distribution module are processed first, and then the call detail record is distributed according to the distribution parameters in the distribution module. The distribution type includes moving or copying. The moving indicates that the call detail record will not be distributed according to other distribution parameters after the call detail record is distributed according to the distribution parameter including the distribution type; and the copying indicates that the call detail record will be copied first and then the copy of the call detail record will be distributed according to other distribution parameters after the call detail record is distributed according to the distribution parameter including the distribution type. The priority includes a preferential processing order for the distribution parameters in the distribution module, that is, the distribution parameter with the highest priority is processed first and the rest may be deduced by analogy. The distribution condition includes a distribution condition string configured according to a syntax rule, and the condition in the string may be used to judge the property of a call detail record; or the distribution condition is configured as a distribution condition set. The structure of each distribution parameter in the lower level distribution module is the same as that in the distribution module 105. There may be more than one distribution module as required. An identifier is configured for each distribution module to be an indica tion identifying different distribution modules. A lower level distribution module, the structure of the distribution parameters of which is the same as that described above, may also be embedded in each distribution module. In the embodiment, it is supposed that there is only one distribution module 105 in the distribution processing module 102, and there is no embedded lower level distribution module in the distribution module 105.

Besides the structure of the distribution parameters in the distribution module, Figure 2 also shows the data storage parameters provided by the data storage parameter module 108 and the transmission channel parameters provided by the transmission channel parameter module 106. The data storage name in a distribution destination name is the same as that in a data storage parameter, in other word, the data storage parameter including the data storage name may be found from the data storage parameters according to the same data storage name in the distribution destination name. The host identifier in the data storage parameter corresponds to the IP address in the transmission channel parameter, in other word, an IP address corresponding to the host identifier may be found from a transmission channel parameter according to the host identifier in the data storage parameter, and then the data storage parameter corresponding to the host identifier may be found.

The distribution conditions configured in the rule engine 104 include distribution condition strings or distribution condition sets, and the distribution condition strings or the distribution condition sets are the same as that included in the distribution conditions configured in the distribution module 105. The distribution condition string or the distribution condition set need to be compiled and executed before being used by the rule engine 104. When a call detail record starts to be distributed, the rule engine 104 is in a operation state, in other word, the rule engine 104 matches the item of the call detail record with the distribution condition strings or the distribution condition sets, takes the matched call detail record as the call detail record according with distribution condition; and then the call detail record is distributed according to the distribution parameter including the distribution condition.

The basis for distributing a call detail record in the embodiments of the present invention includes the data storage parameters configured for the data storage parameter module 108 by the front-end configuration module 109, the transmission channel parameters configured for the transmission channel parameter module 106 by the front-end configuration module 109, the distribution parameters configured for the distribution module 105 by the front-end configuration module 109, and the distribution condition strings or the distribution condition sets configured for the rule engine 104 by the front-end configuration module 109.

The rule engine 104 compiles and executes distribution condition strings or distribution condition sets configured by the front-end configuration module 109, and then the configured distribution condition strings or the distribution condition sets may be used by the rule engine 104 after being compiled and executed. After a call detail record distribution process starts, the rule engine 104 receives a call detail record in a call detail record queue in a process transmitted by the first transmission module 103, matches the item of the call detail record with the distribution condition strings or the distribution condition sets, takes the matched call detail record as the call detail record according with the distribution condition, and provides the matched call detail record to the distribution module 105.

The data storage parameter module 108 provides the data storage parameters configured by the front-end configuration module 109 to the distribution module 105 using the data storage parameters.

The transmission channel parameter module 106 provides the transmission channel parameters configured by the front-end configuration module 109 to the distribution module 105 using the transmission channel parameters.

The distribution module 105 distributes the call detail record provided by the rule engine 104 to the second transmission module 110 according to the distribution parameter including the distribution condition matching with the call detail record by using the distribution parameters configured by the front-end configuration module 109, the data storage parameters provided by the data storage parameter module 108, and the transmission channel parameters provided by the transmission channel parameter module 106. Specifically, the distribution module 105 receives the call detail record provided by the rule engine 104, and determines the distribution destination name in the distribution parameter including the distribution condition matching with the call detail record; when the distribution destination name is a database table name, the distribution module 105 directly distributes the call detail record to a database corresponding to the database table name, and then the call detail record is stored in the database; when the distribution destination name is a data storage name, the distribution module 105 finds a data storage parameter including the data storage name from the data storage parameters, and acquires a host identifier, a file storage directory and a file name rule.

The first transmission module 103 transmits the call detail record queue in the process to the rule engine 104.

The second transmission module 110 transmits the call detail record distributed by the distribution module 105 to the queue file 111.

The queue file 111 includes file storage directories corresponding to the host including the distribution module 105 and a special directory corresponding to other hosts. The queue file 11 receives the call detail record transmitted by the second transmission module 110, stores the call detail record corresponding to the host including the distribution module 105 as a file in the acquired file storage directory, and stores the call detail record corresponding to the other hosts as a fill in the special directory.

In the embodiment of the present invention, it is supposed that there is only one distribution module 105 in the distribution processing module 102, and there is no embedded lower level distribution module in the distribution module 105. Besides the above case, the distribution processing module 102 may also include multiple distribution modules, and each of the distribution modules has an identifier as an indication for identifying the distribution module. The structure of the distribution parameter in each of the distribution modules is the same as that shown in Figure 2. A lower level distribution module may also be embedded in each of the distribution module as required.

In the apparatus for distributing a call detail record automatically provided by the embodiment of the present invention, the distribution parameters in the distribution module 105 may be dynamically configured by the front-end configuration module 109 as required, so the process of configuring the distribution parameters is transparent to the process of distributing the call detail record. Thus, the apparatus may adapt to changefulness in distributing the call detail record. Moreover, before being distributed by the distribution module 105 every time, the call detail record is selected according to the distribution condition; and then the call detail record, after being selected, is distributed according to the relation between the distribution condition and the distribution destinations information. Therefore, the call detail record is distributed automatically. Thus, the codes need not to be revised, and the apparatus may be carried into execution conveniently and quickly adapted to changes in distributing the call detail record. In the embodiment of the present invention, the apparatus is described by taking the host as an example. However, the apparatus may also be other apparatuses with the same function.

The system for distributing a call detail record automatically provided by an embodiment of the present invention is described in detail as follows.

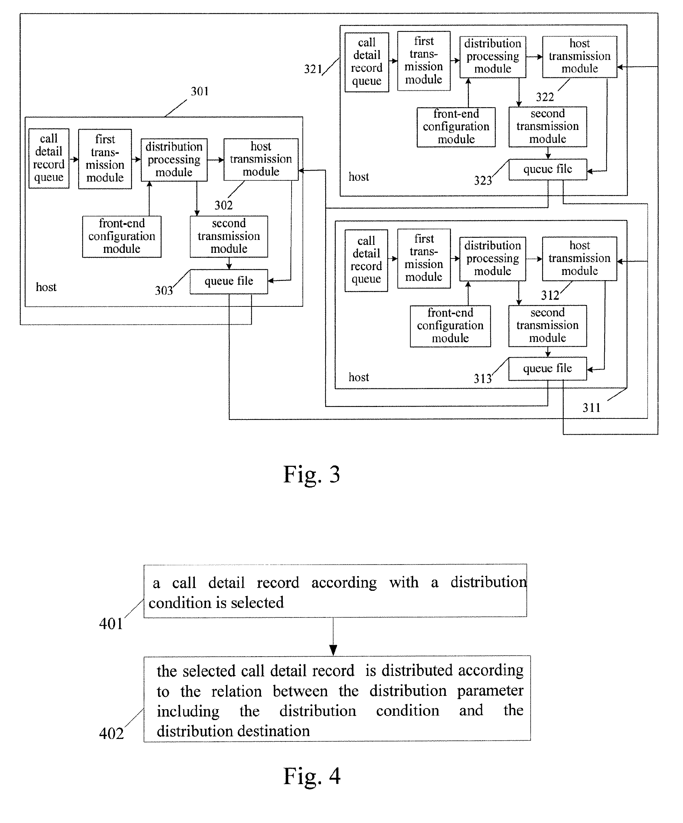

Figure 3 shows a schematic diagram illustrating a structure of a system for distributing a call detail record automatically in accordance with an embodiment of the present invention. With reference to Figure 3, the system includes a host 301, a host 311 and a host 321. Each of the three hosts includes a host transmission module and a distribution processing module; and the distribution processing module includes a transmission channel parameter module. The host may further include a front-end configuration module, a first transmission module and a second transmission module. The distribution processing module may further include a distribution module, a rule engine and a data storage parameter module. The apparatus for distributing a call detail record automatically in accordance with the embodiment of the present invention may serve as a preferred embodiment of the above host. Call detail records are distributed between the three hosts. When the destination type of a call detail record is the database storage, the call detail record is distributed to the appointed database directly, so the distribution of a call detail record with the data storage as the destination type between the hosts is described as follows.

A host transmission module 302 in the host 301 connects to the hosts 311 and 321 periodically according to the transmission channel parameters provided by the transmission channel parameter module in the distribution processing module; the host transmission module 302 in the host 301 respectively reads files according with the data storage parameters stored in the data storage parameter module in the host 301 from the special directories in a queue file 313 in the host 311 and a queue file 323 in the host 321.

Specifically, the host transmission module 302 in the host 301, according to the host identifier in the transmission channel parameter, determines the file name rule corresponding to the host 301, the file storage directory corresponding to the file name rule and the IP address of the hosts 311 and 321: and then the host transmission module 302 accesses the hosts 311 and 321 according to the IP address of the hosts 311 and 321, reads files according with the file name rule corresponding to the host 301 from the special directories in the queue file 313 in the host 311 and the queue file 323 in the host 321; and then the host transmission module 302 in the host 301 puts the read files into a queue file 303 according to the transmission channel parameters provided by the transmission channel parameter module. Specifically, the host transmission module 302 in the host 301 stored the read files according with the file name rule in the file storage directory corresponding to the file name rule.

Similarly, a host transmission module 312 in the host 311 connects to the hosts 301 and 321 periodically according to the transmission channel parameters provided by the transmission channel parameter module in the distribution processing module; the host transmission module 312 in the host 311 reads files according with the data storage parameters stored in the data storage parameter module in the host 311 from the special directories in a queue File 303 in the host 301 and a queue File 323 in the host 321 respectively; and then the host transmission module 312 in the host 311 puts the read files into the queue file 313 according to the transmission channel parameters provided by the transmission channel parameter module. A host transmission module 322 in the host 321 connects to the hosts 311 and 301 periodically according to the transmission channel parameters provided by the transmission channel parameter module in the distribution processing module; the host transmission module 322 in the host 321 reads files according with the data storage parameters stored in the data storage parameter module in the host 321 from the special directories in the queue file 313 in the host 311 and the queue file 303 in the host 301 respectively; and then the host transmission module 322 in the host 321 puts the read files into the queue file 323 according to the transmission channel parameters provided by the transmission channel parameter module. The time interval for each of the host transmission modules in the hosts to connect to the other hosts may be configured as required.

In the conventional method, a host transmits a call detail record from the host to other hosts by writing a script or operating manually according to the running result of a stored program with the call detail record distribution function after running the program. Compared with the conventional method, in the system for distributing a call detail record automatically provided by the embodiment of the present invention, data storage parameters corresponding to a host identifier are defined in a transmission channel parameter in a transmission channel parameter module, and a host transmission module connects to the other hosts in the system periodically by using transmission channel parameters provided by the transmission channel parameter module and reads files according with the data storage parameters of the host from the other hosts. Thus, the automatic distribution of the call detail record between the hosts in the system is implemented.

The number of the hosts in the system for distributing the call detail record automatically provided by the embodiment of the present invention may be not 3 as required, which will not be further described.

Finally, the method for distributing a call detail record automatically provided by an embodiment of the present invention is described in detail.

Figure 4 shows a flow chart of a method for distributing a call detail record automatically in accordance with an embodiment of the present invention. In the method, distribution parameters including distribution conditions are configured in advance, and the relation between the distribution parameters and distribution destinations is configured. The above configuration may be performed by a front-end. The method also includes the following processes.

At block 401, a call detail record according with a distribution condition is selected.

At this block, the call detail record according with the distribution condition is selected according to the distribution conditions in the distribution parameters configured in advance before the process starts. The distribution condition may be a distribution condition string or a distribution condition set. The detailed method for selecting the call detail record may include: compiling and executing the configured distribution condition string or the distribution condition set, matching the item of the call detail record with the distribution condition string or the distribution condition set after the compiling and execution, and taking the matched call detail record as the call detail record according with the distribution condition. When the distribution parameters configured in advance include priorities, the call detail records according with the distribution conditions in the distribution parameters are respectively selected in turn according to the priorities of the distribution parameters.

At block 402, the selected call detail record is distributed according to the relation between the distribution parameter including the distribution condition and the distribution destination.

At this block, the call detail record according with the distribution condition selected in block 401 is distributed according to the relation between the distribution parameter including the distribution condition and the distribution destination configured in advance.

In the method for distributing a call detail record automatically provided by an embodiment of the present invention, the distribution parameter may be dynamically configured via a front-end configuration module as required, thus the process of configuring the distribution parameter is transparent to the process of distributing the call detail record. Therefore, the method may adapt to changefulness in distributing the call detail record. Moreover, before being distributed every time, the call detail record according with the distribution condition in the distribution parameter is selected, and then the call detail record, after being selected, is distributed according to the relation between the distribution parameter including the distribution condition and the distribution destination. Thus, the call detail record is distributed automatically. Moreover, the codes need not to be written and revised in the method, thus the method may be carried into execution conveniently and adapt to changes in distributing the call detail record.

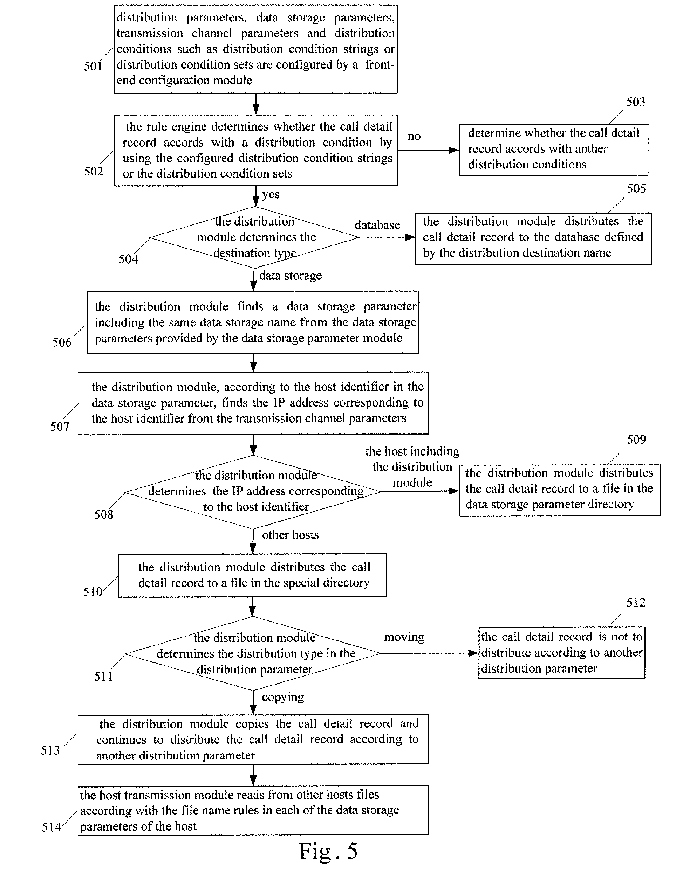

The above method may be applied to the system shown in Figure 3. The method for distributing the call detail record automatically in accordance with the embodiment of the present invention is described in detail according to the system shown in Figure 3. Moreover, in the description, the call detail record process begins at host 301. Figure 5 shows a flow chart of the method for distributing the call detail record automatically according to the system shown in Figure 3 in accordance with the embodiment of the present invention. With reference to Figure 5, the method includes the following processes.

At block 501, distribution parameters, data storage parameters, transmission channel parameters and distribution conditions such as distribution condition strings or distribution condition sets are configured by a front-end configuration module.

At this block, the distribution parameters in the distribution module are configured by the front-end configuration module, and the structure of the distribution parameter is the same as that shown in Figure 2; the data storage parameter in the data storage parameter module configured by the front-end configuration module includes a data storage name, a file name rule, a host identifier and a file storage directory; the transmission channel parameter in the transmission channel parameter module configured by the front-end configuration module includes the host identifier of each host, IP address corresponding to the host identifier and the data storage parameters corresponding to the host identifier; here, the data storage parameter corresponding to the host identifier includes the file name rule corresponding to the host identifier and the file storage directory corresponding to the file name rule in the data storage parameter; and the distribution condition strings or the distribution condition sets in the rule engine are configured by the front-end configuration module.

At block 502, the rule engine determines whether the call detail record accords with a distribution condition by usin g the configured distribution condition strings or the distribution condition sets; if yes, block 504 is performed; if no, block 503 is performed.

At this block, the distribution conditions configured in the rule engine include distribution condition strings or distribution condition sets which are the same as that included in the distribution conditions of the distribution parameters in the distribution module. The distribution condition strings or the distribution condition sets may be used by the rule engine after being compiled and executed. Taking the distribution condition of the distribution parameter including the highest priority as an example, after the call detail record process starts, the rule engine matches the item of the call detail record in the process according to the distribution condition strings or the distribution condition sets in the distribution conditions. Then the rule engine takes the matched call detail record as the call detail record according with the distribution condition and continues to perform block 504; or block 503 is performed if the match fails.

At block 503, the rule engine determines whether the call detail record accords with the distribution conditions of the other distribution parameters.

At this block, the rule engine determines whether the call detail record failing in the match at block 502 accords with the distribution conditions in the other distribution parameters, and the determination method is the same as that at block 502. When the call detail record is matched successfully at block 502, block 504 is performed and block 503 is omitted.

At block 504, the rule engine provides the matched call detail record to the distribution module; the distribution module determines the destination type in the distribution parameter, when the destination type is database storage, block 505 is performed, and when the destination type is data storage, block 506 is performed.

At this block, the rule engine provides the matched call detail record, i.e., the call detail record matched with the distribution condition string or the distribution condition set in the distribution parameter including the highest priority, to the distribution module; and the distribution module processes the call detail record according to the distribution parameter including the highest priority. The distribution module performs block 505 when the destination type in the distribution parameter is the database, and performs block 506 when the destination type in the distribution parameter is the data storage.

At block 505, the distribution module distributes the call detail record to the database defined by the distribution destination name.

At this block, if the destination type in the distribution parameter including the highest priority is the database, the distribution module directly distributes the call detail record to the database according to the database table name defined in the distribution destination name of the distribution parameter; if the destination type in the distribution parameter including the highest priority is the data storage, this block is not performed and block 506 is performed directly.

At block 506, the distribution module finds a data storage parameter including the same data storage name as that defined in the distribution destination name from the data storage parameters provided by the data storage parameter module.

At this block, the destination type is the data storage, and the data storage name is defined in the distribution destination name. According to the data storage name, the distribution module may find the data storage parameter including the same data storage name from the data storage parameters provided by the data storage parameter module.

At block 507, the distribution module, according to the host identifier in the data storage parameter, finds the IP address corresponding to the host identifier from the transmission channel parameters provided by the transmission channel parameter module.

At this block, the IP addresses corresponding to the host identifiers are defined in the transmission channel parameters provided by the transmission channel parameter module. And the distribution module may find the IP address corresponding to the host identifier from the transmission channel parameters according to the host identifier in the data storage parameter.

At block 508, the distribution module determines the IP address corresponding to the host identifier, performs block 509 if the IP address corresponds to the host including the distribution module, or performs block 510 if the IP address corresponds to the other hosts.

At this block, the distribution module determines the IP address corresponding to the host identifier found in block 507. The IP address may correspond to the host including the distribution module or the other hosts. The distribution module performs block 509 if the IP address corresponds to the host including the distribution module while performs block 510 if the IP address corresponds to the other hosts.

In the embodiment of the present invention, the host identifier may be taken as an environment variable, then block 508 is not performed, and in block 507 the distribution module determines whether the host identifier corresponds to the host including the distribution module, if yes, block 509 is performed; otherwise, block 510 is performed.

At block 509, the distribution module distributes the call detail record to a file in the file storage directory of data storage parameter included in the queue file of the host including the distribution module.

At this block, the distribution module determines the file storage directory corresponding to the call detail record according to the transmission channel parameter. For example, the distribution module may determine the file storage directory according to the file name rule or the data storage name which corresponds to the call detail record. And the distribution module distributes the call detail record to a file in the file storage directory corresponding to the call detail record in the queue file of the host including the distribution module.

At block 510, the distribution module distributes the call detail record to a file in the special directory included in the queue file of the host including the distribution module.

There is a file in the special directory included in the queue dedicated to storing call detail records not according with the data storage parameters of the host. At this block, the distribution module distributes the call detail record not according with the data storage parameters of the host to the file in the special directory.

At blocks 502 to 510, the distribution module distributes the file provided by the rule engine according to the distribution parameter including the highest priority by using the data storage parameters provided by the data storage parameter module and the transmission channel parameters provided by the transmission channel parameter module. The rule engine selects call detail records according with the distribution conditions in turn according to the configured distribution condition strings or the distribution condition sets until all the call detail records in the call detail record queue in the process are selected. The distribution module distributes the call detail records provided by the rule engine according to each of the distribution parameters in the same way as that in the above process.

At block 511, the distribution module determines the distribution type in the distribution parameter, performs block 512 if the distribution type is moving, and performs block 513 if the distribution type is copying.

At this block, after distributing the call detail record according to the distribution parameter, the distribution module determines whether the call detail record needs to be distributed according to another distribution parameter by using the distribution type in the distribution parameter, and the distribution module performs block 512 if the distribution type is moving, or performs block 513 if the distribution type is copying.

At block 512, the call detail record is to be distributed not according to another distribution parameters.

At block 513, the distribution module copies the call detail record and continues to distribute the call detail record according to another distribution parameter.

At this block, the distribution module copies the call detail record first and then provides the copy of the call detail record to the rule engine; the rule engine performs the match for the copy of the call detail record by using the method described in block 502, and then the rule engine selects the call detail record as the call detail record according with another distribution condition, and the call detail record is distributed by using the process as that described at blocks 503 to 510.

At blocks 501 to 513, the distribution of the call detail record in the host 301 is accomplished. Since the call detail record may be distributed between the hosts in the system, the above processes further include the following blocks.

At block 514, the host transmission module reads from other hosts files according with the file name rules in each of the data storage parameters of the host.

At this block, the host transmission module 312 in the host 311 periodically connects to the queue file 303 in the host 301 according to the transmission channel parameter provided by the transmission channel parameter module in the host 311, and reads files according with the file name rules in each of the data storage parameters of the host 311 from the special directory in the queue file 303 in the host 301, and then the host transmission module 312 transmits the read call detail records according to file storage directories corresponding to the file name rules configured in the transmission channel parameter, and stores the read call detail records in the directory in the queue file of the host 311; similarly, the host transmission module 322 in the host 321 periodically connects to the queue file 303 in the host 301, reads files according with the file name rules in the data storage parameters of the host 321, and then transmits and stores the read files.

Each host in the system shown in Figure 3 may include multiple distribution modules and each of the distribution modules may include embedded lower level modules. In this case, the above processes may be changed correspondingly. Specifically, if the apparatus includes multiple distribution modules, an identifier is configured before block 501 by the front-end configuration module for each of the distribution modules as an indication for identifying the distribution modules; and distribution parameters are configured for each of the distribution modules in block 501; the distribution module to be processed is selected first according to the configured identifier before block 502, and then the rule engine matches the item of the call detail record with the distribution condition strings or the distribution condition sets in the distribution parameters of the selected distribution module. If each of the distribution modules includes embedded lower level distribution modules in the case that the system includes one or multiple distribution modules, then in block 503, when the destination type in the distribution parameter is determined to be a lower level distribution module by the distribution module, the distribution parameters in the lower level distribution module are processed first, and then the distribution parameters in the distribution module are processed.

In the embodiment of the present invention, it is supposed that the call detail record process starts at the host 301. In practice, the call detail record process may also start at the host 311 or the host 312, and the call detail record distribution process is the same as that described above.

To sum up, the above is only preferred embodiments of the present invention and is not for use in limiting the protection scope of the embodiments of the present invention. Any modification, equivalent substitution, and improvement without departing from the principle of the present invention should be covered in the protection scope of the present invention.

## Claims

1. A method for distributing a call detail record, comprising:
selecting a call detail record according with a distribution condition from call detail records to be selected;
determining distribution destination information corresponding to the distribution condition; and
distributing the call detail record according with the distribution condition according to the determined distribution destination information.

2. The method of Claim 1, wherein determining the distribution destination information corresponding to the distribution condition comprises:
determining a database table name corresponding to the distribution condition according to a preconfigured relation between distribution conditions and database table names; and
distributing the call detail record according with the distribution condition according to the determined distribution destination information comprises:
distributing the call detail record ac cording with the distribution condition to a database corresponding to the determined database table name.

3. The method of Claim 1, wherein determining the distribution destination information corresponding to the distribution condition comprises:
determining an apparatus identifier corresponding to the distribution condition according to a preconfigured relation between distribution conditions and apparatus identifiers;
determining whether the apparatus corresponding to the distribution condition is a first apparatus which selects the call detail record according to the apparatus identifier; and
when the apparatus corresponding to the distribution condition is the first apparatus, determining a file storage directory corresponding to the distribution condition according to a preconfigured relation between distribution conditions and file storage directories; or when the apparatus corresponding to the distribution condition is not the first apparatus, determining a preconfigured special directory as a file storage directory corresponding to the distribution condition; and
distributing the call detail record according with the distribution condition according to the determined distribution destination information comprises:
distributing the call detail record in the determined file storage directory.

4. The method of Claim 1, wherein determining the distribution destination information corresponding to the distribution condition comprises:
determining a low level distribution condition corresponding to the distribution condition;
determining distribution destination information corresponding to the low level distribution condition; and
distributing the call detail record according to the distribution destination corresponding to the low level distribution condition.

5. The method of Claim 1, further comprising:
determining priorities corresponding to distribution conditions according to a preconfigured relation between distribution conditions and priorities; and
determining a distribution condition for selecting call detail records according to the priorities corresponding to distribution conditions.

6. The method of Claim 1, further comprising:
determining whether the call detail record needs to be distributed again;
copying the call detail record when the call detail record needs to be distributed again; and
taking the copy of the call detail record as one of the call detail records to be selected.

7. The method of Claim 3, wherein determining whether the apparatus corresponding to the distribution condition is the first apparatus according to the apparatus identifier comprises:
determining the IP address of the apparatus corresponding to the distribution condition according to a preconfigured relation between apparatus identifiers and IP addresses; and
determining whether the apparatus corresponding to the distribution condition is the first apparatus according to the determined IP address.

8. The method of Claim 3, wherein determining whether the apparatus corresponding to the distribution condition is the first apparatus according to the apparatus identifier comprises:
determining the environment variable corresponding to the apparatus identifier according to a preconfigured relation between apparatus identifiers and environment variables; and
determining whether the apparatus corresponding to the distribution condition is the first apparatus according to the determined environment variable.

9. The method of Claim 1, wherein the distribution condition comprises:
distribution condition string or distribution condition set corresponding to the item of the call detail record.

10. The method of Claim 3, further comprising:
reading, by an second apparatus, a file corresponding to the second apparatus from the special directory of the first apparatus; and
distributing, by the second apparatus, the read file in a file storage directory of the second apparatus.

11. The method of Claim 10, wherein reading the file corresponding to the second apparatus from the special directory of the first apparatus comprises:
determining the IP address of the first apparatus according to a preconfigured relation between apparatus identifiers and IP addresses;
determining the file name rule corresponding to the second apparatus according to a preconfigured relation between apparatus identifiers and file name rules; and
reading the file according with the determined file name rule from the special directory of the apparatus corresponding to the determined IP address.

12. The method of Claim 11, wherein distributing the read files in the file storage directory of the second apparatus comprises:
determining the file storage directory corresponding to the read file according to a preconfigured relation between file name rules and file storage directories; and
distributing the read file in the determined file storage directory.

13. An apparatus for distributing a call detail record, comprising:
a front-end configuration module, for configuring distribution conditions; and
a distribution processing module, for selecting a call detail record according with a distribution condition from call detail records to be selected; determining distribution destination information corresponding to the distribution condition; and distributing the call detail record according with the distribution condition according to the determined distribution destination information.

14. The apparatus of Claim 13, wherein the distribution processing module comprises:
a rule engine, for selecting the call detail record according with the distribution condition from call detail records to be selected; and
a distribution module, for determining the distribution destination information corresponding to the distribution condition and distributing the call detail record according with the distribution condition according to the determined distribution destination information.

15. The apparatus of Claim 14, wherein the distribution module comprises:
a first submodule, for determining a database table name corresponding to the distribution condition; and distributing the call detail record according with the distribution condition to a database corresponding to the determined database table name.

16. The apparatus of Claims 14, wherein the distribution module comprises:
a second submodule, for determining the apparatus identifier corresponding to the distribution condition according to a relation between distribution conditions and apparatus identifiers; determining whether the apparatus corresponding to the distribution condition is the apparatus according to the apparatus identifier; when the apparatus corresponding to the distribution condition is the apparatus, determining a file storage directory corresponding to the distribution condition according to a relation between distribution conditions and file storage directories; or when the apparatus corresponding to the distribution condition is not the apparatus, determining a preconfigured special directory as a file storage directory corresponding to the distribution condition; and distributing the call detail record in the determined file storage directory; and
the front-end configuration module further configured to configure the relation between distribution conditions and apparatus identifiers and the relation between distribution conditions and file storage directories.

17. The apparatus of Claim 16, wherein the distribution processing module further comprises:
a data storage parameter module, for sending to the second module the relation between the distribution conditions and the apparatus identifiers and the relation between the distribution conditions and the file storage directories configured by the front-end configuration module.

18. The apparatus of Claim 16, wherein the distribution module further comprises:
a third submodule, for determining priorities corresponding to distribution conditions according to a preconfigured relation between distribution conditions and priorities; determining a distribution condition for selecting call detail records according to the priorities corresponding to distribution conditions; and sending the determined distribution condition to the rule engine to select the call detail record.

19. The apparatus of Claim 16, wherein the distribution module further comprises:
a fourth submodule, for copying the call detail record and sending the copy of the call detail record to the rule engine to be one of the call detail records to be selected.

20. The apparatus of Claim 14, wherein the distribution module further comprises an embedded low level distribution module.

21. The apparatus of Claim 20, wherein the distribution module further comprises:
a fifth submodule, for sending the call detail record the embedded low level distribution module.

22. The apparatus of Claim 16, further comprising:
a transmission module, for determining the IP address of a second apparatus according to a relation between apparatus identifiers and IP addresses; determining the file name rule corresponding to the apparatus according to a relation between apparatus identifiers and file name rules; reading the file according with the determined file name rule from the special directory of the second apparatus corresponding to the determined IP address; and
the front-end configuration module further configured to configure the relation between apparatus identifiers and IP addresses and the relation between apparatus identifiers and file name rules.

23. The apparatus of Claim 22, wherein the distribution processing module further comprises:
a transmission channel parameter module, for sending to the transmission module the relation between apparatus identifiers and IP addresses and the relation between apparatus identifiers and file name rules configured by the front-end configuration module.
